# EUROPÄISCHE PATENTSCHRIFT

(11) **EP 0 925 139 B1**
(45) Veröffentlichungstag und Bekanntmachung des Hinweises auf die Patenterteilung: **05.06.2002**
(21) Anmeldenummer: 97919022.0
(22) Anmeldetag: 02.09.1997
(51) Int. Cl.: B23K 9/18

(54) **MEHRDRAHTSCHWEISSBRENNER**
MULTIWIRE WELDING TORCH
CHALUMEAU MULTIFILAIRE

(30) Priorität: 02.09.1996 DE 19635607
(43) Veröffentlichungstag der Anmeldung: 30.06.1999
(73) Patentinhaber: ALEXANDER BINZEL GmbH & Co. KG, D-35418 Buseck (DE)
(72) Erfinder: SPERLING, Hermann, D-55296 Gau-Bischofsheim (DE)
(74) Vertreter: Müller, Eckhard, Dr.
(86) Internationale Anmeldenummer: EP9704778
(87) Internationale Veröffentlichungsnummer: WO9809766

(56) Entgegenhaltungen:
- EP-A- 0 256 126
- WO-A-92/00160
- GB-A- 741 989
- US-A- 4 246 463

## Beschreibung

Die Erfindung bezieht sich auf einen Mehrdrahtschweißbrenner mit einem eine Kontaktdüse aufweisenden Brenner, Zuführeinrichtungen für Gas und Strom, insbesondere ein Schlauchpaket, und mit einer Fördereinrichtung für die wenigstens zwei Schweißdrähte hin zu der Kontaktbeziehungsweise Stromdüse, wobei die Fördereinrichtung wenigstens zwei Antriebe für die wenigstens zwei Schweißdrähte aufweist.

Mit derartigen Mehrdrahtschweißbrennern wird eine Variante des bekannten MIG/MAG-Schweißverfahrens ermöglicht, wobei hohe Schweißgeschwindigkeiten erreicht werden. Dadurch wird eine Steigerung der Produktivität erzielt. Die Mehrdrahtbrenner lassen sich in den drei wichtigsten Werkstoffbereichen, wie Stahl, Edelstahl und Aluminium, mit hoher Effizienz einsetzen, woraus eine erhebliche Kostenreduktion resultiert. Gemeinsam ist allen Mehrdrahtschweißbrennern, daß die Schweißdrähte durch die Kontaktdüse zur Arbeitsstelle geführt werden.

Stand der Technik ist, daß bei Mehrdrahtbrennern die zwei oder mehr Drähte über das Schlauchpaket zugeführt werden. Die Antriebe sitzen in Zuführungsrichtung vor dem Schlauchpaket. Die Schweißdrähte werden über Fördereinrichtungen über eine Haspel zugeführt, wobei beträchtliche Längen innerhalb des Schlauchpaketes überwunden werden müssen, was ersichtlicherweise bei langen Strecken zu Drahtförderproblemen führen kann. Dabei kann es auftreten, daß das gesamte System keine ausreichende Reproduzierbarkeit der Schweißparameter aufweist und keine definierten elektrischen Leitfähigkeitswerte gewährleistet. Die isoliert geführten Drahtelektroden benötigen nämlich eine präzis definierte Stromübertragung im Bereich der Stromdüse, welche sich vorne in der Gasdüse befindet.

Ein Mehrdrahtschweißbrenner mit den eingangs genannten Merkmalen ist bereits aus der EP 0 256 126 A1 bekannt. Bei dieser Vorrichtung wird dem Brenner mittels einer Vorschubeinrichtung und Transportrollen eine abschmelzende Hauptelektrode zugeführt. Weiterhin besitzt die Vorschubeinrichtung Transportrollen für eine abschmelzende Zusatzelektrode, die aus drei einzelnen Drähten besteht. Die Hauptelektrode sowie die Zusatzelektrode werden von der Vorschubeinrichtung zu einer Stromzuführungseinrichtung geführt, mittels der die Schweißdrähte auf gleichem Potential gehalten werden. Bei derartigen Mehrdrahtschweißbrennern werden als Schutzmedium verschiedene Schweißpulver oder -gase verwendet. Die Regelung des Schweißstroms, der Nahtabmessungen und der Nahtform sowie die Produktivität des Schweißprozesses erfolgt durch die Änderung der Vorschubgeschwindigkeit der abschmelzenden Elektrode in die Schweißzone und durch eine Änderung der Schweißspannung. Diese bekannte Vorrichtung ist recht voluminös aufgebaut, wobei auch die Reproduzierbarkeit der Schweißparameter nicht befriedigt.

Aus der US 4,246,463 A ist eine Schweißbrennervorrichtung mit drei Schweißköpfen bekannt, die dicht beabstandet zueinander angeordnet und gemeinsam miteinander bzgl. des Werkstückes verfahrbar sind. Jedem dieser Brennerköpfe wird ein einziger Schweißdraht mittels einer Transportvorrichtung zugeführt. Der Brennerkopf umfasst einen Motor, der Rollen antreibt, welche einen Schweißdraht in Vorschubbewegung versetzen und durch eine elektrische Kontaktierung hindurchführen. Die verschiedenen Schweißdrähte der drei Schweißbrenner sind in unterschiedlichen, speziellen Winkeln zueinander eingestellt. Diese Schweißvorrichtung baut ebenfalls groß und ist aufwendig.

Aus der GB 741 989 ist ein Lichtbogenschweißbrenner mit einer Fördereinrichtung für einen Schweißdraht bekannt, bestehend aus zwei motorangetriebenen Rollen, die den Schweißdraht durch einen flexiblen Tubus hin zu dem eigentlichen Brenner führen, der innerhalb der konischen Spitze eines großen trichterförmigen Gebildes (flux hopper) angeordnet ist. Nach einer anderen Ausführungsform dieser Druckschrift können auch zwei Brenner innerhalb der konischen Spitze des trichterförmigen Gebildes angeordnet sein, denen jeweils ein Schweißdraht zugeführt wird.

Aus der WO 92/00160 ist eine Lichtbogensprühkopfvorrichtung (narrow beam arc spray head device) bekannt, mit dem ein Werkstück mit einer Metallbeschichtung versehen werden kann. Der Kopf dieser Vorrichtung weist Fördervorrichtungen für die Zufuhr zweier Drähte auf, die mittels Führungen am Kopfende dicht zusammengeführt werden, wobei die Zuführvorrichtung am rückwärtigen Bereich eines Gehäuses angeordnet ist, an dessen vorderseitige Abschnitt der eigentliche Kopf der Sprühvorrichtung befestigt ist.

Davon ausgehend liegt der Erfindung die Aufgabe zugrunde, einen Mehrfachschweißbrenner zu schaffen, der eine absolut definierte, präzise Drahtführung ermöglicht, wobei eine kleine Bauform des Brenners und ein einfaches Auswechseln von Verschlussteilen ermöglicht ist.

Diese Aufgabe wird erfindungsgemäß gelöst von einem Mehrdrahtschweißbrenner mit den Merkmalen des Anspruchs 1. Ausführungen der Erfindung sind Gegenstand von Unteransprüchen.

Wesentlich an der Erfindung ist, daß die Antriebe für die Schweißdrähte direkt am Brenner befestigt und im Brenner selbst integriert sind. Dadurch wird erfindungsgemäß eine kleine Bauform im Vergleich zu zwei vollkommen separaten Brennern nebeneinander erreicht. Dadurch, daß die Antriebe in dem Brenner selbst integriert sind, ist eine geringe Förderstrecke zwischen Stromdüse und Antrieb erreicht, wodurch eine hohe Reproduzierbarkeit der Schweißparameter gegeben ist. Durch entsprechende Auslegung der Antriebe ist es möglich, auf zusätzliche Zwischenantriebe, wie etwa beim Push-Pull-Verfahren, zu verzichten. Hierdurch ist eine für die Automatisierung erforderliche hohe Prozeßsicherheit gewährleistet. Die kompakte Bauweise ermöglicht es, daß die Drahtelektroden im Bereich des Antriebes relativ nah zueinander geführt werden, so daß das Zusammenführen der Schweißdrähte im Bereich der Kontaktdüse i. w. parallel verlaufen, so daß eine Beanspruchung der Drahtelektroden wie bei den bekannten Brennern mit einem konischen Zulaufen wesentlich reduziert ist. Dabei ist es von Vorteil, in irgendeiner Art und Weise eine Zugänglichkeit der Antriebe für die Servicearbeiten zu ermöglichen, wobei sich Verschwenkungen um beliebige Achsen anbieten. Auch können die Antriebe auf andere Weise, z.B. durch Aufstecken oder Anschrauben, lösbar mit dem Schweißbrenner befestigt sein.

In einer bevorzugten Ausführungsform ist für jeden Schweißdraht ein eigener Antrieb vorgesehen. Jede Vorschubeinrichtung weist also einen separaten Antrieb, z.B. einen so genannten Push-Pull-Antrieb auf, bei welchem der Schweißdraht von einer Haspel über das Schlauchpaket dem Brenner zugeführt und evtl. zusätzlich von einem zweiten Antrieb gezogen und der Stromdüse bzw. Kontaktdüse zugeführt wird. Selbstverständlich ist es auch möglich, daß der Schweißdraht im so genannten Pull-Verfahren von der Haspel abgezogen wird, ohne daß zusätzliche Zwischenantriebe erforderlich sind. Die am Brenner integrierten Antriebe fördern dann den Schweißdraht direkt von der Haspel zur Stromdüse. Der jedem Schweißdraht zugeordnete separate Antrieb bietet den Vorteil, jeden Schweißdraht mit unterschiedlicher Geschwindigkeit, unterschiedlichem Durchmesser und/oder unterschiedlichen Schweißparametern zuzuführen, wobei die einzelnen Schweißdrähte auf demselben oder den gleichen elektrischen Potentialen liegen können. Hierdurch ist eine optimale Einstellung der Schweißparameter, insbesondere der Schweißdrahtförderung ermöglicht.

In einer weiteren bevorzugten Ausführungsform sind die Antriebe schwenkbar an dem Brenner befestigt, insbesondere schwenkbar um eine zur Brennerachse parallel verlaufenden Achse. Dies hat den Vorteil, daß die Verschleißteile der Antriebseinrichtung, wie bspw. die Drahtförderrollen, die Drahteinlaufdüsen oder dergleichen, problemlos und schnell ausgetauscht werden können. Hierfür werden die Antriebe nach außen verschwenkt, so daß die Verschleißteile einfach und schnell ausgewechselt werden können. Das Verschwenken um eine zur Brennerachse parallele Achse kann auch dazu benutzt werden, den Anpreßdruck der Förderrollen auf beliebige Werte einzustellen. Nach dem Durchführen der Service- oder Reparaturarbeiten können die Antriebe in einfacher Weise um ihre Schwenkachsen wieder in die Arbeitsstellung zurückgeschwenkt und verrastet werden. Die Schwenkbarkeit der Antriebe ermöglicht darüber hinaus eine noch kompaktere Bauweise mit enger Führung der Schweißdrähte bereits im Bereich der Antriebe. Es sei hier angemerkt, daß im Rahmen der Erfindung auch auf eine Verschwenkbarkeit der Antriebe mit Druckförderrollen verzichtet werden kann.

Zur Verbesserung der Drahtführung dient auch die erfindungsgemäße Maßnahme, daß die Drahtföderrollen der Antriebe in einer Ebene angeordnet sind.

In einer weiteren Ausführung der Erfindung sind die den wenigsten zwei Drähten zugeordneten Antriebe mit Drahtförderrollen gegenüber den Drahtelektroden elektrisch isoliert. Dies kann bevorzugt dadurch erreicht werden, daß die Antriebe auf einer Isolierplatte innerhalb des Brennergehäuses sitzen. Hierdurch ist sichergestellt, daß die eine Strombeaufschlagung der Drähte erst durch die Kontaktdüse und nicht unkontrolliert im Bereich der Förderstrecke erfolgt. Damit laufen die Drahtelektroden absolut potentialfrei bis zur Kontakthülse, ein undefiniertes Stromziehen, bspw. innerhalb des maschinenseitigen Anschlusses, der Führung im Schlauchpaket oder im Brennerkörper selbst ist damit vermieden.

In einer weiteren Ausführungsform können die Antriebe für den erfindungsgemäßen Schweißbrenner mit Meßgeräten wie Inkrementalgebern, Tachogebern oder anderen Aufnahmegeräten für den Durchlauf der Drähte versehen sein, um die geförderte Wegstrecke oder den Drahtdurchlauf zu messen. Bei Inkrementalgebern beispielsweise erfolgt dies durch Aufsummieren der erzeugten Impulse, wodurch die jeweils geförderte Wegstrecke berechnet werden kann. Diese Informationen können zur Steuerung oder Regelung des Schweißvorganges verwendet werden und erlauben eine höhere Automatisierung des Schweißvorganges.

Weitere Vorteile und Anwendungsmöglichkeiten der vorliegenden Erfindung ergeben sich aus der nachfolgenden Beschreibung eines Ausführungsbeispieles anhand der Zeichnung.

Es zeigen:
- Figur 1: eine Seitenansicht eines erfindungsgemäßen Mehrdrahtschweißbrenners,
- Figur 2: eine Draufsicht auf den Brenner gemäß Figur 1 und
- Figur 3: eine Draufsicht auf den Brenner gemäß Figur 1 mit nach außen geschwenkten Antrieben.

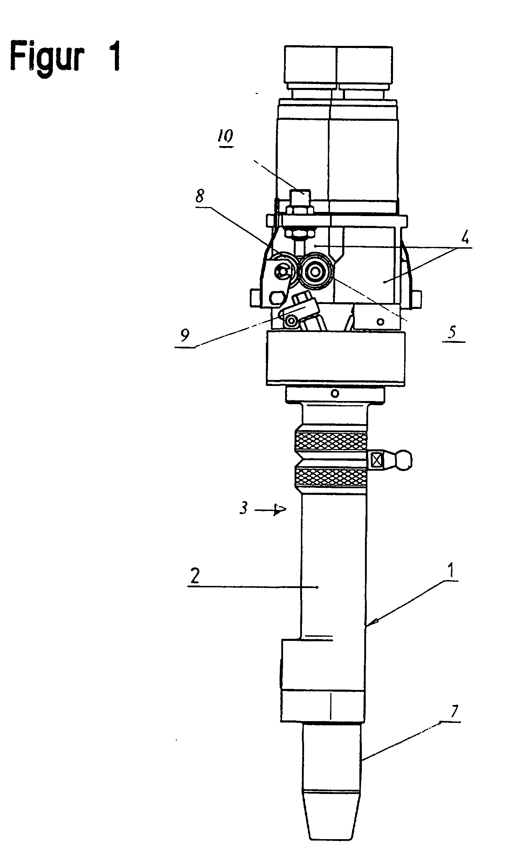

Bei dem in Figur 1 dargestellten Brenner handelt es sich um einen Mehrdrahtschweißbrenner, bei welchem mehrere Schweißdrähte zur Kontaktdüse, die sich innerhalb der Gasdüse 7 befindet, gefördert werden. Insgesamt ist der Brenner mit Bezugszeichen 1 bezeichnet. Er weist gemäß Fig. 1, unten, ein vorderes, die Kontaktdüse bzw. Stromdüse, die Gasdüse 7, Versorgungseinrichtungen, Führungen und dgl. aufweisendes Brennerteil 2 auf. Das vordere Brennerteil 2 ist über eine Positioniereinrichtung 3 mit der Zuführeinrichtung für die beiden Drähte verbunden. Als Zuführeinrichtungen sind hier, entsprechend der Anzahl der Schweißdrähte, zwei Antriebe 4 vorgesehen. Sie umfassen im wesentlichen Elektromotoren, die über je ein Getriebe die Drahtförderrollen 5 bewegen. Über die Drahtförderrollen 5 bzw. zwischen den Drahtförderrollen 5 und den Andrückrollen 8 werden die Schweißdrähte über Drahtführungen 9 in die Kontaktdüse geführt. Die Zuführung der Drahtelektroden zur Fördereinrichtung bzw. den Förderrollen 5, 8 erfolgt über Drahtführungen 10.

Gemäß den Figuren ist ein integrierter Aufbau erreicht, indem die Antriebe 4 direkt an dem Brenner 1 angeordnet sind. Der Förderweg zwischen den Drahtförderrollen 5 und der Kontaktbzw. Stromdüse im vorderen Teil 2 des Brenners 1 ist dadurch relativ kurz, wodurch eine präzis definierte Nachführung der Schweißdrähte ermöglicht wird.

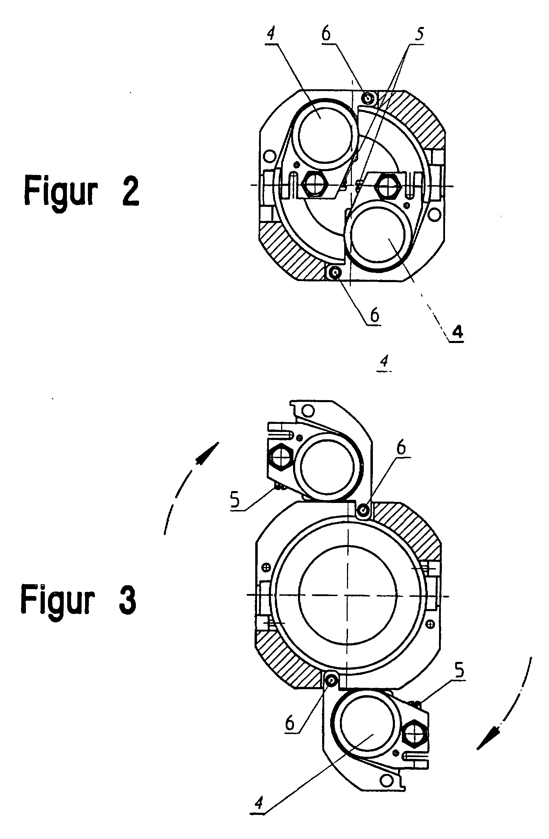

Figur 2 zeigt eine Draufsicht auf den erfindungsgemäßen Mehrdrahtschweißbrenner. Dargestellt sind u. a. die beiden Antriebe 4 in Arbeitsposition, so daß ihre Drahtförderrollen 5 den Draht in die vorgesehenen Öffnungen des Brenners 2 schieben können. Zu erkennen sind auch die Schwenkachsen 6, um die die Antriebe 4 schwenkbar sind.

Figur 3 zeigt den Brenner der Figur 2, jedoch mit ausgeschwenkten Antrieben 4. Die Bewegungsrichtung beim Verschwenken ist durch die beiden Pfeile angedeutet. Durch die Verschwenkung können Verschleißteile wie die Drahtförderrollen 5 oder die Drahteinlaufdüsen einfach ausgewechselt werden. Nach solchen Servicearbeiten werden die beiden Antriebe 4 in einfacher Weise um die Schwenkachsen 6 wieder in ihre Arbeitsstellung gemäß Figur 1 bzw. Figur 2 zurückgeschwenkt und verrastet. Zu erkennen ist auch, daß über den Schwenkwinkel in der Betriebsstellung, bspw. mittels einer Federbelastung der Anpreßdruck der Drahtförderrollen 5 auf die Schweißdrähte eingestellt werden kann.

Durch die Verschwenkbarkeit der beiden Antriebe 4 und dem daraus resultierenden kompakten Aufbau sowie der Anordnung der Drahtförderrollen 5, 8 in einer Ebene ist eine enge Führung der Drahtelektroden im Bereich der Zuführeinrichtungen ermöglicht, so daß die Schweißdrähte praktisch parallel zur Kontaktdüse geführt werden können und Belastungen der Drahtelektroden vermieden sind.

## Patentansprüche

1. Mehrdrahtschweißbrenner (1) mit einem, eine Kontakt- bzw. Stromdüse aufweisenden Brennerteil (2), Zuführeinrichtungen für Gas und Strom, insbesondere ein Schlauchpaket, und mit einer Fördereinrichtung für die wenigstens zwei Schweißdrähte hin zu der Kontakt- beziehungsweise Stromdüse, wobei die Fördereinrichtung wenigstens zwei Antriebe (4) für die wenigstens zwei Schweißdrähte aufweist, **dadurch gekennzeichnet, daß** die Antriebe (4) direkt am Brenner (1) angeordnet und in diesen integriert sind, wobei die Antriebe (4) für Servicearbeiten zugänglich, insbesondere lösbar oder verschwenkbar, an dem Brenner (1) befestigt sind.

2. Mehrdrahtschweißbrenner nach Anspruch 1, **dadurch gekennzeichnet, daß** für jeden der mehreren Schweißdrähte jeweils ein eigener Antrieb (4) vorgesehen ist.

3. Mehrdrahtschweißbrenner nach Anspruch 1 oder Anspruch 2, **dadurch gekennzeichnet, daß** die Antriebe (4) um eine Achse (6), die parallel zur Brennerachse verläuft, schwenkbar im Brenner (1) angeordnet sind.

4. Mehrdrahtschweißbrenner nach einem der vorhergehenden Ansprüche, **dadurch gekennzeichnet, daß** Drahtförderrollen (5, 8) der Antriebe (4) in einer Ebene angeordnet sind.

5. Mehrdrahtschweißbrenner nach einem der vorhergehenden Ansprüche, **dadurch gekennzeichnet, daß** die Antriebe (4) mit Drahtförderrollen (5, 8) gegenüber den Drahtelektroden elektrisch isoliert sind, insbesondere auf einer Isolierplatte innerhalb des Brennergehäuses sitzen.

6. Mehrdrahtschweißbrenner nach einem der vorhergehenden Ansprüche, **dadurch gekennzeichnet, daß** die Schweißdrähte isoliert geführt sind und die Stromkontaktierung in Förderrichtung nachfolgend der Fördereinrichtungen erst in der Kontaktdüse des Brenners (1) erfolgt.

7. Mehrdrahtschweißbrenner nach einem der vorhergehenden Ansprüche, **dadurch gekennzeichnet, daß** an den Antrieben (4) Meßgeräte für den Drahtvorschub angeordnet sind.

8. Mehrdrahtschweißbrenner nach einem der Ansprüche 3 bis 7, **dadurch gekennzeichnet, dass** über den Schwenkwinkel der Antriebe (4) in der Betriebsstellung der Anpressdruck von Drahtförderrollen (5) der Antriebe (4) auf die Schweißdrähte einstellbar ist.

## Claims

1. Multi-wire welding torch (1) comprising a torch part (2), which has a contact nozzle or current nozzle, feed devices for gas and current, particularly a hose packet, and a conveying device for the at least two welding wires towards the contact nozzle or current nozzle, wherein the conveying device comprises at least two drives (4) for the at least two welding wires, **characterised in that** the drives (4) are arranged directly at the torch (1) and integrated therein, wherein the drives (4) are fastened to the torch (1) to be accessible particularly detachable or pivotable, for servicing operations.

2. Multi-wire welding torch according to claim 1, **characterised in that** a respective own drive (4) is provided for each of the several welding wires.

3. Multi-wire welding torch according to claim 1 or claim 2, **characterised in that** the drives (4) are arranged in the torch (1) to be pivotable about an axis (6) extending parallelly to the torch axis.

4. Multi-wire welding torch according to one of the preceding claims, **characterised in that** wire conveying rollers (5, 8) of the drives (4) are arranged in one plane.

5. Multi-wire welding torch according to one of the preceding claims, **characterised in that** the drives (4) together with wire conveying rollers (5, 8) are electrically insulated relative to the wire electrodes, particularly seated on an insulating plate within the torch housing.

6. Multi-wire welding torch according to one of the preceding claims, **characterised in that** the welding wires are guided in insulating manner and the current contacting takes place downstream of the conveying devices in the conveying direction not until in the contact nozzle of the torch (1).

7. Multi-wire welding torch according to one of the preceding claims, **characterised in that** measuring apparatus for the wire advance are arranged at the drives (4).

8. Multi-wire welding torch according to one of claims 3 to 7, **characterised in that** the pressing pressure of wire conveying rollers (5) of the drives (4) against the welding wires is settable by way of the pivot angle of the drives (4) into the operational setting.

## Revendications

1. Torche de soudage multifilaire (1) comportant un élément de torche (2) portant un tube contact ou buse de courant, des dispositifs d'alimentation en gaz et en courant, en particulier un faisceau de tuyaux flexibles, et comportant un dispositif d'amenée conduisant au moins deux fils de soudure vers le tube contact ou buse de courant, le dispositif d'amenée comportant au moins deux entraînements (4) pour lesdits au moins deux fils de soudure, **caractérisée en ce que** les entraînements (4) sont montés directement sur la torche (1) et sont intégrés dans celle-ci, les entraînements (4) étant accessibles pour des travaux d'entretien, étant notamment montés sur la torche (1) de façon démontable ou pivotante.

2. Torche de soudage multifilaire selon la revendication 1, **caractérisée en ce qu'**un entraînement propre (4) est prévu pour chacun desdits plusieurs fils de soudure.

3. Torche de soudage multifilaire selon la revendication 1 ou la revendication 2, **caractérisée en ce que** les entraînements (4) sont montés sur la torche (1) de manière pivotante autour d'un axe (6) qui s'étend parallèlement à l'axe de la torche.

4. Torche de soudage multifilaire selon l'une des revendications précédentes, **caractérisée en ce que** les galets de transport de fil (5, 8) des entraînements (4) sont disposés dans un même plan.

5. Torche de soudage multifilaire selon l'une des revendications précédentes, **caractérisée en ce que** les entraînements (4) munis des galets de transport (5, 8) du fil sont électriquement isolés par rapport aux fils électrodes, étant notamment montés sur une plaque d'isolation à l'intérieur du carter de torche.

6. Torche de soudage multifilaire selon l'une des revendications précédentes, **caractérisée en ce que** les fils de soudure sont guidés de façon isolée, et que l'établissement du contact électrique se fait, dans le sens de l'avance du fil, seulement après les dispositifs d'amenée, dans le tube contact de la torche (1).

7. Torche de soudage multifilaire selon l'une des revendications précédentes, **caractérisée en ce que** des appareils de mesure du débit du fil sont disposés sur les entraînements (4).

8. Torche de soudage multifilaire selon l'une des revendications 3 à 7, **caractérisée en ce que**, grâce à l'angle de pivotement des entraînements (4), en position de fonctionnement, la pression de serrage des galets de transport de fil (5) des entraînements (4), appuyant sur les fils de soudure, est réglable.
